# EUROPÄISCHE PATENTSCHRIFT

(11) **EP 3 621 188 B1**
(45) Veröffentlichungstag und Bekanntmachung des Hinweises auf die Patenterteilung: **05.10.2022**
(21) Anmeldenummer: 18189508.7
(22) Anmeldetag: 17.08.2018
(51) Int. Cl.: H02K 41/03, H02K 33/18, H02K 11/33

(54) **LINEARMOTORSYSTEM**
LINEAR MOTOR SYSTEM
SYSTÈME DE MOTEUR LINÉAIRE

(43) Veröffentlichungstag der Anmeldung: 11.03.2020
(73) Patentinhaber: Schneider Electric Industries SAS, 92500 Rueil-Malmaison (FR)
(72) Erfinder: Brandstätter, Wolfgang, 77955 Ettenheim (DE)
(74) Vertreter: Manitz Finsterwald Patent- und Rechtsanwaltspartnerschaft mbB

(56) Entgegenhaltungen:
- EP-A1- 2 156 979
- EP-A2- 0 052 346
- WO-A1-2016/202798
- US-A- 3 771 033

## Beschreibung

Die vorliegende Erfindung betrifft ein Linearmotorsystem mit mehreren Statorelementen, die jeweils eine Magnetspule zum Erzeugen eines magnetischen Flusses im jeweiligen Statorelement umfassen, und mit zumindest einem Läufer, der zumindest ein Magnetelement aufweist, das mit den Magnetspulen der Statorelemente in Wechselwirkung steht, und der mittels Aktivierung zumindest eines Statorelements in einer Bewegungsrichtung relativ zu den Statorelementen bewegt wird.

Bremsen für solche Linearmotorsysteme beruhen typischerweise auf der Reibung zwischen dem Läufer und einem Führungselement für diesen, beispielsweise einer Schiene. Die Bremskraft ist dabei durch die Normalkraft rechtwinklig zur Bewegung des Läufers und durch einen materialabhängigen Reibungskoeffizienten festgelegt.

Bei solchen Reibungsbremsen werden Bremsbacken beispielsweise mittels einer oder mehreren Federn gegen das Führungselement bzw. die Schiene des Läufers gepresst. Zum Öffnen der Bremse wird die Anpresskraft, die beispielsweise durch Federn ausgeübt wird, typischerweise mittels einer Hydraulik, Pneumatik oder mit elektromagnetischen Mitteln kompensiert.

Die Bremsen können einerseits eine Haltefunktion ausüben, wenn sich der Läufer bereits in Ruhe befindet. Wenn sich der Läufer bewegt, können die Bremsbacken ebenso mit hydraulischen oder pneumatischen Mitteln gegen das Führungselement bzw. die Schiene gepresst werden, um die kinetische Energie des Läufers zu dissipieren.

Auf der Reibung beruhende Bremsen weisen den generellen Nachteil auf, dass sie mit einer Abnutzung am Läufer und einer lokalen Abnutzung an Abschnitten des Führungselements bzw. der Schiene verbunden sind. Darüber hinaus kann eine Verschmutzung des Führungselements bzw. der Schiene aufgrund der Reibung auftreten.

Bei Linearmotorsystemen, die nur einen einzigen Läufer aufweisen und bei denen sich die Statorelemente im Vergleich zur Länge des Läufers über eine große Länge erstrecken, ist eine Bremse üblicherweise an dem Läufer angebracht. Bei Linearmotorsystemen mit mehreren Läufern hingegen, die passive Magnetelemente wie beispielsweise Permanentmagneten aufweisen, befinden sich die Bremsen hingegen typischerweise im Bereich der Statorelemente. Bei einem Stromausfall besteht das Risiko von Kollisionen zwischen mehreren Läufern mit unterschiedlichen Geschwindigkeiten. Zur Abschwächung möglicher Kollisionen sind daher häufig Stoßfänger an den Läufern vorgesehen.

Aus der WO 2016/202798 A1 ist ein Linearmotorsystem mit den Merkmalen gemäß dem Oberbegriff des Anspruchs 1 bekannt.

Die EP 2 156 979 A1 beschreibt ein ähnliches Linearmotorsystem.

In der US 3 771 033 A ist ebenfalls ein ähnliches Linearmotorsystem beschrieben.

Schließlich beschreibt auch die EP 0 052 346 A2 ein ähnliches Linearmotorsystem.

Eine Aufgabe der Erfindung besteht darin, ein Linearmotorsystem mit einer verbesserten Brems- und/oder Haltefunktionalität zu schaffen.

Diese Aufgabe wird durch ein Linearmotorsystem mit den Merkmalen des Anspruchs 1 gelöst. Das erfindungsgemäße Linearmotorsystem umfasst mehrere Statorelemente, die jeweils eine Magnetspule umfassen, wobei die Magnetspule einen transversalen magnetischen Fluss in einem jeweiligen Statorelement erzeugt. Das Linearmotorsystem umfasst zumindest einen Läufer, der zumindest ein Magnetelement aufweist, das mit der jeweiligen Magnetspule der Statorelemente in Wechselwirkung steht. Der Läufer wird mittels Aktivierung zumindest eines Statorelements in einer Bewegungsrichtung relativ zu den Statorelementen bewegt.

Erfindungsgemäß ist ferner zumindest ein ausgewähltes Statorelement ausgebildet, um bezüglich des magnetischen Flusses von einem ersten Zustand in einen zweiten Zustand zu wechseln aufzuweisen, während die übrigen Statorelemente bezüglich des magnetischen Flusses in dem ersten Zustand bleiben. In dem zweiten Zustand übt das ausgewählte Statorelement eine Brems- und/oder Haltekraft auf den Läufer aus.

Da die Haltekraft auf den Läufer durch die Veränderung des magnetischen Flusses des zumindest einen ausgewählten Statorelements bezogen auf die weiteren Statorelemente bewirkt wird, ist für das Bremsen und/oder Halten des Läufers keine mechanische Reibung zwischen diesem und weiteren Elementen des Linearmotorsystems erforderlich. Daher tritt im erfindungsgemäßen Linearmotorsystem beim Bremsen und/oder Halten des Läufers keine Abnutzung zwischen Elementen des Linearmotorsystems auf. Darüber hinaus entsteht keine Verschmutzung aufgrund der Reibung zwischen dem Läufer und weiteren Elementen.

Das zumindest eine ausgewählte Statorelement unterscheidet sich somit in dem zweiten Zustand zumindest von einem Teil der weiteren Statorelemente des Linearmotorsystems bezüglich des magnetischen Flusses. Dieser Unterschied kann auch dann bestehen bleiben, wenn eine Strom- und Spannungsversorgung des Linearmotorsystems ausgeschaltet ist oder ein Stromausfall auftritt. Dadurch bleibt die Haltefunktionalität des Linearmotorsystems auch in einem solchen Fall bestehen. Wenn das Linearmotorsystem mehrere Läufer aufweist, werden diese folglich auch beim Abschalten des Linearmotorsystems oder bei einem Stromausfall abgebremst bzw. gehalten. Dadurch wird das Risiko unbeabsichtigter Kollisionen zwischen mehreren Läufern im erfindungsgemäßen Linearmotorsystem verringert. Das Linearmotorsystem kann mit anderen Worten über eine implizite Sicherheitsfunktion verfügen, mit der ein oder mehrere Läufer auch im abgeschalteten Zustand des Linearmotorsystems abgebremst bzw. gehalten werden.

Außerdem kann die Position des zumindest einen ausgewählten Statorelements entlang des Linearmotorsystems geeignet festgelegt werden. Dadurch ist es möglich, den Läufer an der vorbestimmten Position des ausgewählten Statorelements zu bremsen und/oder zu halten und dadurch eine Bremszone und/oder eine Haltezone für den Läufer entlang dessen Bewegungsbahn zu definieren. Mit anderen Worten bewirkt das ausgewählte Statorelement das Bremsen des Läufers und/oder bewirkt als Halteraste das Rasten an der vorbestimmten Position.

Bei den übrigen Statorelementen, die in dem ersten Zustand bleiben, kann es sich insbesondere um "normale" Statorelemente handeln, die nicht zum Bremsen oder Halten des Läufers vorgesehen sind.

Erfindungsgemäß wechselt das ausgewählte magnetisch isolierbare Statorelement bezüglich des magnetischen Flusses dadurch zwischen dem ersten und dem zweiten Zustand, dass magnetische Verbindungen zwischen dem magnetisch isolierbaren Statorelement und zu diesem magnetisch isolierbaren Statorelement entlang des Stators beiderseits benachbarten jeweiligen Statorelementen mittels Permanentmagneten unterbrochen werden, so dass das magnetisch isolierbare Statorelement in dem zweiten Zustand gegenüber den zu diesem magnetisch isolierbaren Statorelement entlang des Stators beiderseits benachbarten jeweiligen Statorelementen magnetisch isoliert ist. Zum Deaktivieren einer Haltezone für den Läufer, die durch das magnetisch isolierbare Statorelement und die zu diesem magnetisch isolierbaren Statorelement entlang des Stators beiderseits benachbarten jeweiligen Statorelemente gebildet wird, wird die magnetische Isolierung des magnetisch isolierbaren Statorelements jedoch wieder mittels einer Überbrückungseinrichtung aufgehoben, um hierbei in den ersten Zustand zu wechseln.

Alternativ kann das magnetisch isolierbare Statorelement dadurch zum Wechseln zwischen dem ersten und dem zweiten Zustand ausgebildet sein, dass zwischen dem ausgewählten magnetisch isolierbaren Statorelement und zu diesem magnetisch isolierbaren Statorelement entlang des Stators beiderseits benachbarten jeweiligen Statorelementen Elektromagnete aktivierbar sind. Durch die Elektromagnete kann der magnetische Fluss im Bereich des ausgewählten magnetisch isolierbaren Statorelements im Vergleich zu den weiteren Statorelementen verändert werden. Die Elektromagnete können eine Aktivierung und Deäktivierung einer Haltezone für den Läufer gestatten, ohne dass mechanische Elemente zur Überbrückung der Isolierung des magnetischen Flusses erforderlich sind.

Vorteilhafte Ausführungen der Erfindung sind in den Unteransprüchen, der Beschreibung und in den Zeichnungen angegeben.

Gemäß einem Ausführungsbeispiel umfasst das Linearmotorsystem mehrere Statorelemente, die ausgebildet sind, um bezüglich des magnetischen Flusses derart zwischen einem aktiven Zustand und einem passiven Zustand zu wechseln, dass die mehreren Statorelemente eine Bremskraft auf den Läufer ausüben. Bevorzugt sind dabei das zumindest eine ausgewählte Statorelement, das die Haltekraft auf den Läufer ausübt, und die mehreren Statorelemente, die eine Bremskraft auf den Läufer ausüben, benachbart angeordnet. Die mehreren Statorelemente, die zwischen dem aktiven und dem passiven Zustand wechseln, können ferner auch das zumindest eine ausgewählte Statorelement umfassen, welches dann einerseits zum Halten/Rasten zwischen dem ersten und zweiten Zustand und andererseits zum Bremsen zwischen dem aktiven und passiven Zustand wechseln kann. Insbesondere kann der erste Zustand durch den aktiven Zustand gebildet werden,

wohingegen der zweite Zustand durch den passiven Zustand gebildet sein kann.

Generell kann das Umschalten oder Wechseln zwischen dem ersten und dem zweiten Zustand mechanisch und/oder elektrisch erfolgen, wie später noch genauer ausgeführt wird.

Durch das Vorhandensein der mehreren Statorelemente zusätzlich zu dem zumindest einen ausgewählten Statorelement kann der Läufer somit entlang einer vorbestimmten Strecke abgebremst werden und beispielsweise bei der Position des ausgewählten Statorelements stehenbleiben. Mit anderen Worten lassen sich mittels der mehreren Statorelemente und dem zumindest einen ausgewählten Statorelement definierte Bremszonen und Haltezonen entlang des Linearmotorsystems einrichten. Wenn das zumindest eine ausgewählte Statorelement und die mehreren Statorelemente, welche die Bremskraft auf den Läufer ausüben, benachbart angeordnet sind, ist folglich eine Bremszone unmittelbar angrenzend an eine Haltezone angeordnet, so dass der Läufer auf eine vorbestimmte Weise abgebremst und in der Haltezone, z.B. mittels einer Rastkraft, gehalten werden kann.

Darüber hinaus können zwei Bremszonen mit mehreren Statorelementen auf beiden Seiten einer Haltezone mit zumindest einem ausgewählten Statorelement angrenzend aneinander angeordnet sein. Dies ermöglicht eine definierte Brems- und Haltefunktionalität des Linearmotorsystems in einem vorbestimmten Bereich, wenn eine bidirektionale Bewegung des Läufers vorgesehen ist. Bei einer unidirektionalen Bewegung des Läufers, bei welcher sich dieser beispielsweise auf einer geschlossenen Bahn bewegt, kann darüber hinaus zur Sicherheit eine ausgedehnte Haltezone vorgesehen sein, die mehrere ausgewählte Statorelemente zum Ausüben einer Haltekraft umfasst.

Eine ähnliche Sicherungsfunktion kann auch dadurch eingerichtet werden, dass auf eine Bremszone mit mehreren Statorelementen und eine sich anschließende Haltezone mit einem ausgewählten Statorelement eine weitere Bremszone mit mehreren Statorelementen sowie eine weitere Haltezone mit einem weiteren ausgewählten Statorelement folgt. Darüber hinaus können sowohl bei einer unidirektionalen als auch bei einer bidirektionalen Bewegung des Läufers drei Bremszonen mit mehreren Statorelementen vorgesehen sein, zwischen denen jeweils eine Haltezone mit zumindest einem ausgewählten Statorelement angeordnet ist. Diese Anordnung umfasst somit zwei Haltezonen, zwischen denen ein oder mehrere Läufer des Linearmotorsystems bei Bedarf eingeschlossen werden können.

Das Linearmotorsystem weist vorzugsweise eine Steuereinheit auf, die das Wechseln des zumindest einen ausgewählten Steuerelements zwischen dem ersten und dem zweiten Zustand und/oder das Wechseln der mehreren Statorelemente zwischen dem aktiven und dem passiven Zustand steuert. Die Funktionalität zum Wechseln zwischen den jeweiligen Zuständen der Statorelemente ist somit bei dieser Ausführungsform in die Steuereinheit verlagert. Die Statorelemente können somit einfach und kostengünstig ausgestaltet sein, da die Funktionalität zum Wechseln zwischen den Zuständen nicht in diesen an sich implementiert ist.

Gemäß einem weiteren Ausführungsbeispiel umfasst das Linearmotorsystem eine Einrichtung zum Kurzschließen der Magnetspulen des zumindest einen ausgewählten Statorelements und/oder der mehreren Statorelemente. Unter der Magnetspule des zumindest einen ausgewählten Statorelements ist eine Magnetspule zu verstehen, die einen magnetischen Fluss in dem jeweiligen Statorelement erzeugt. Die Magnetspule muss dabei nicht direkt das jeweilige Statorelement umgeben oder mit dem Statorelement in direktem mechanischen Kontakt stehen. Das Wechseln der mehreren Statorelemente und/oder des ausgewählten Statorelements von dem aktiven in den passiven Zustand erfolgt bei dieser Ausführungsform somit durch das Kurzschließen der jeweiligen Magnetspulen. Ein Kurzschließen soll dabei bevorzugt allgemein das Erzeugen einer Bremswirkung in dem Läufer durch Umwandeln von magnetischer bzw. elektrischer Energie in Wärme mittels der Magnetspule und/oder einem zusätzlichen elektrisch mit der Magnetspule verbundenem Dissipationselement (z.B. einem ohmschen Widerstand) umfassen.

Allgemein kann der Wechsel in den passiven Zustand auch durch eine Kopplung der Magnetspule mit dem Dissipationselement erfolgen. Die nachfolgend genannte Einrichtung zum Kurzschließen kann dementsprechend auch das Dissipationselement mit der Magnetspule koppeln.

Der zweite bzw. passive Zustand des ausgewählten Statorelements bzw. der mehreren Statorelemente entspricht bei dieser Ausführungsform somit einem kurzgeschlossenen Zustand der jeweiligen Magnetspulen. Der zweite Zustand zum Ausüben der Haltekraft mittels des ausgewählten Statorelements und der passive Zustand zum Ausüben der Bremskraft auf den Läufer mittels der mehreren Statorelemente lassen sich somit bei dieser Ausführungsform auf einfache Weise durch Kurzschließen von Magnetspulen einstellen. Die Kurzschlussströme der Magnetspulen der jeweiligen Statorelemente werden dabei verwendet, um die kinetische Energie des Läufers zu dissipieren bzw. in thermische Energie umzuwandeln. Bevorzugt werden die Magnetspulen der Statorelemente durch jeweilige Halbleiterschalter kurzgeschlossen. Aufgrund der geringen Impedanz solcher Schalter ist in diesem Fall typischerweise keine Wärmesenke zum Ableiten der Dissipationswärme erforderlich. Unter den verwendbaren Halbleiterschaltern sind solche mit selbstleitenden Halbleitern besonders bevorzugt, beispielsweise solche mit großer Bandlücke wie etwa Galliumnitrid.

Alternativ können die Magnetspulen der Statorelemente mittels elektromechanischer Kontakte kurzgeschlossen werden. Dadurch lässt sich die Einrichtung zum Kurzschließen der Magnetspulen auf kostengünstige Weise realisieren.

Vorzugsweise ist die Einrichtung zum Kurzschließen der Magnetspulen in die Steuereinheit integriert. Dadurch können die Statorelemente an sich wiederum auf einfache und kostengünstige Weise ausgestaltet sein. Alternativ ist die Einrichtung zum Kurzschließen der Magnetspulen vorzugsweise im Bereich der Statorelemente angeordnet. Dies ist insbesondere dann möglich, wenn Schalter aus einem Halbleiter mit großer Bandlücke verwendet werden. In diesem Fall braucht eine Steuereinheit die Einrichtung zum Kurzschließen der Magnetspulen lediglich anzusteuern, und die Steuereinheit kann entsprechend einfacher ausgestaltet sein, da in dieser nicht das Kurzschließen der Magnetspulen an sich durchgeführt wird.

Die Einrichtung zum Kurzschließen der Magnetspulen ist bevorzugt in einem passiven Zustand eingeschaltet ("normally on"). Mit anderen Worten ist die Einrichtung in dem aktiven Zustand ausgeschaltet (d.h. nichtleitend), in welchem die Magnetspulen nicht kurzgeschlossen sind, d.h. während eines Normalbetriebs des Linearmotorsystems ohne Haltefunktionalität. Hierzu kann im aktiven Zustand ein Steuersignal an die Einrichtung (z.B. einen Transistor) angelegt sein. Die Magnetspulen der Statorelemente werden umgekehrt dann kurzgeschlossen, wenn die Einrichtung in dem passiven Zustand ist, d.h. wenn kein Steuersignal an die Einrichtung angelegt ist. Somit erfolgt das Kurzschließen der Magnetspulen auch beim Ausschalten des Linearmotorsystems und bei einem Stromausfall. Wenn das Linearmotorsystem mehrere Läufer umfasst, lässt sich dadurch das Risiko von Kollisionen der mehreren Läufer verringern.

Gemäß einem weiteren Ausführungsbeispiel ist zumindest ein ausgewähltes Statorelement, welches dauerhaft den zweiten Zustand aufweist, dadurch gebildet, dass das Statorelement verkleinert ausgebildet ist und/oder einen unterschiedlichen Abstand zu anderen Statorelementen aufweist und/oder dass das Statorelement zumindest im Wesentlichen fehlt. Beispielsweise können die Statorelemente jeweils einen "Zahn" aus einem magnetisch leitenden Material umfassen, wobei der Zahn sich bevorzugt zu dem Läufer oder der Führungsbahn hin erstreckt und sich zugleich senkrecht zu der Bewegungsrichtung des Läufers erstrecken kann. Ein verkleinertes Statorelement kann nun durch einen verkürzten Zahn gebildet sein. Alternativ oder zusätzlich kann der "normale" Abstand zwischen den Statorelement z.B. vergrößert werden, um den unterschiedlichen Abstand zu bilden.

Schließlich ist es auch noch möglich, ein Statorelement auch zumindest im Wesentlichen wegzulassen (Verkleinerung bis Null).

Der unterschiedliche Abstand bei dem ausgewählten Statorelement kann insbesondere unterschiedlich zu benachbarten Statorelementen und/oder unterschiedlich zu dem normalen, d.h. üblicherweise verwendeten Abstand sein.

Durch das ausgewählte Statorelement kann so ein Bereich entlang der Führungsbahn realisiert werden, in welchem die Energie des magnetischen (Läufer-)Felds unterschiedlich zu dem "nicht ausgewählten" bzw. normalen Statorelementen ist. Durch die Energiedifferenz kann eine Rast- bzw. Haltekraft erzeugt werden, wobei sich diese Kraft proportional zu der Energiedifferenz verhält.

Es versteht sich, dass auch für ein Statorelement, welches dauerhaft in dem zweiten Zustand ist, es zusätzlich immer noch möglich ist, die Magnetspule dieses ausgewählten Statorelements wahlweise kurzzuschließen. Dies gilt insbesondere bei verkleinerten ausgewählten Statorelementen oder ausgewählten Statorelementen mit unterschiedlichem Abstand. Hierdurch kann die Halte- bzw. Bremskraft weiter verstärkt werden. Zudem ist anzumerken, dass auch ausgewählte Statorelemente zugleich Teil der mehreren Statorelemente sein können. Generell kann eine Magnetspule um einen jeweiligen Zahn des Statorelements herum angeordnet sein.

Gemäß einem weiteren Ausführungsbeispiel ist der Abstand zwischen zwei Statorelementen, die jeweils neben dem zumindest einen ausgewählten Statorelement angeordnet sind, in Bewegungsrichtung des Läufers ungefähr gleich dem Abstand zweier Magnetpole in dem Magnetelement des Läufers. Die zwei Statorelemente auf beiden Seiten des ausgewählten Statorelements liegen somit den zwei Magnetpolen am Läufer jeweils gegenüber. Da der Abstand zwischen den jeweiligen Magnetpolen der zwei Statorelemente und denjenigen des Läufers minimiert ist, lässt sich auf diese Weise eine besonders große Haltekraft realisieren, die auf den Läufer ausgeübt wird.

Darüber hinaus ist die Steuereinrichtung vorteilhafterweise ausgebildet, um mittels z.B. einer Vorwärtssteuerung die Haltekraft zu kompensieren, die das zumindest eine ausgewählte Statorelement auf den Läufer ausübt. Wenn während eines Normalbetriebs des Linearmotorsystems eine Haltekraft auf den Läufer ausgeübt wird, steuert die Steuereinrichtung beispielsweise Magnetspulen benachbarter Statorelemente des ausgewählten Statorelements derart an, dass deren magnetischer Fluss den fehlenden magnetischen Fluss des ausgewählten Statorelements kompensiert. Dadurch lassen sich Schwankungen in einer Antriebskraft ausgleichen, die durch die Statorelemente auf den Läufer ausgeübt wird, um diesen gleichförmig zu bewegen.

Gemäß einem weiteren Ausführungsbeispiel ist das Linearmotorsystem ein Linearmotorsystem mit longitudinalem magnetischem Fluss, bei dem sich der magnetische Fluss der Statorelemente im Wesentlichen in Bewegungsrichtung des Läufers erstreckt. Bei dieser Ausführungsform kann das zumindest eine ausgewählte Statorelement dadurch gebildet sein, wie oben bereits ausgeführt, dass eines der Statorelemente zumindest teilweise entfernt ist. Dadurch wird die Position des ausgewählten Statorelements bzw. einer Haltezone für den Läufer statisch fest vorgegeben. Im Falle eines entfernten Statorelements wird der, ggf. verbleibende, Bereich des Stators als ausgewähltes Statorelement bezeichnet. Ein zumindest teilweises Entfernen eines Statorelements kann auch durch Verschieben eines Statorelements entlang der Bewegungsrichtung erfolgen.

Alternativ kann das zumindest eine ausgewählte Statorelement bei einer Ausführungsform des Linearmotorsystems mit longitudinalem magnetischem Fluss dadurch zum Wechseln zwischen dem ersten und zweiten Zustand ausgebildet sein, dass das ausgewählte Statorelement zumindest teilweise entfernbar und/oder deaktivierbar ist. Bei einer solchen Ausführungsform ist zwar die Position des ausgewählten Statorelements bzw. der mit dem Statorelement verbundenen Haltezone für den Läufer vorgegeben. Die Haltezone kann jedoch durch erneutes Hinzufügen bzw. Aktivieren des ausgewählten Statorelements dynamisch ausgeschaltet werden, nachdem sie zuvor mittels Entfernen und/oder Deaktivieren des ausgewählten Statorelements eingeschaltet wurde.

Erfindungsgemäß ist das Linearmotorsystem ein Linearmotorsystem mit transversalem magnetischem Fluss, bei dem sich der magnetische Fluss der Statorelemente im Wesentlichen rechtwinklig zur Bewegungsrichtung des Läufers erstreckt.

Es ist zwischen den Statorelementen und dem Magnetelement des Läufers ein Luftspalt vorhanden. Durch den Luftspalt wird ein geringer Abstand zwischen dem Magneten und den Statorelementen (d.h. dem so gebildeten Linearmotor) geschaffen, so dass der Magnet nicht an dem Linearmotor schleift. Dementsprechend kann der Läufer lediglich im Bereich einer Schiene bzw. Führungsbahn mechanischen Kontakt mit dem Linearmotor aufweisen. Die Führungsbahn kann beispielsweise durch zwei voneinander beabstandete Schienen gebildet sein, wobei der Läufer mittels Rollen auf den Schienen laufen kann. Unterhalb und/oder innerhalb der Führungsbahn kann eine große Anzahl an hintereinander angeordneten Statorelementen vorgesehen sein.

Die Erfindung wird nachstehend rein beispielhaft anhand von Ausführungsbeispielen und möglicher Ausbildungen der Erfindung unter Bezugnahme auf die beigefügte Zeichnung erläutert. Es zeigen:
Fig. 1 eine schematische Darstellung eines beispielhaften Linearmotorsystems mit longitudinalem magnetischem Fluss,
Fig. 2 eine schematische Darstellung eines Abschnitts eines Ausführungsbeispiels eines Linearmotorsystems,
Fig. 3A bis 3C schematische Darstellungen verschiedener Ausführungsbeispiele Linearmotorsystems mit longitudinalem magnetischem Fluss,
Fig. 4A bis 4C schematische Darstellungen verschiedener Ausführungsbeispiele eines Linearmotorsystems (4A,4C) und einer Ausführungsform eines erfindungsgemäßen Linearmotorsystems mit transversalem magnetischem Fluss,
Fig. 5A bis 5C verschiedene Anordnungen von Bremszonen und Haltezonen beispielhafter Linearmotorsysteme und
Fig. 6A und 6B Ergebnisse von Simulationsrechnungen für eine Bremskraft und eine erforderliche Länge einer Bremszone für ein Ausführungsbeispiel eines Linearmotorsystems.

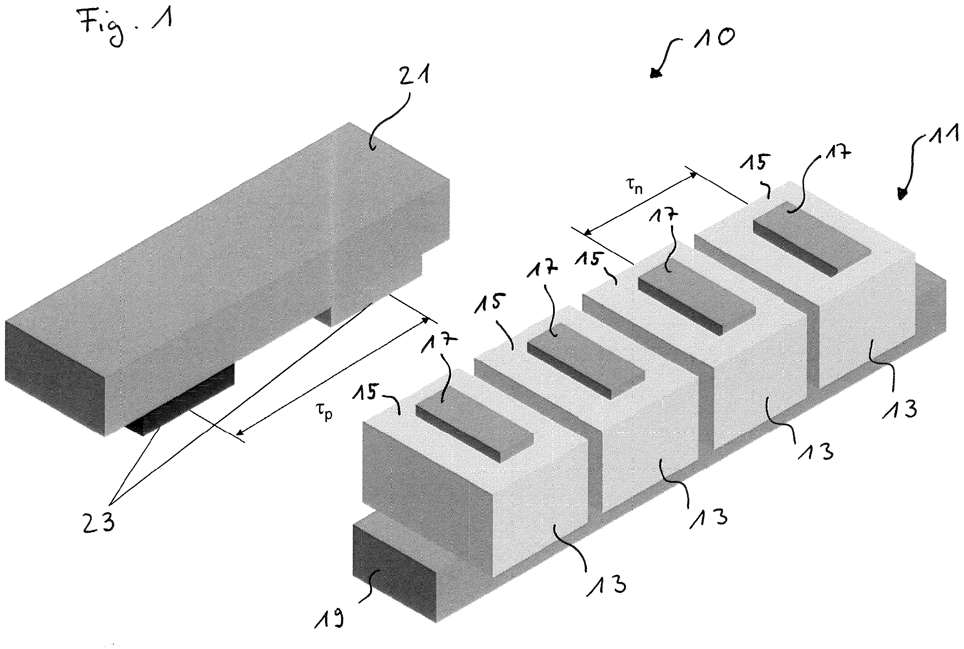

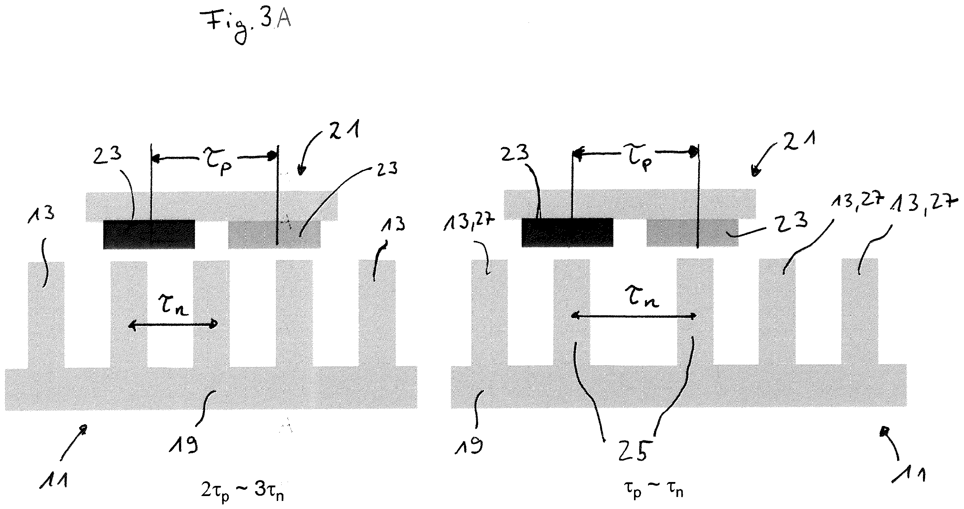

Fig. 1 zeigt ein beispielhaftes Linearmotorsystem 10, das einen Stator 11 mit Statorelementen 13 umfasst. Die Statorelemente 13 weisen jeweils eine Magnetspule 15 und einen Kern 17 auf. Ferner sind die Statorelemente 13 mittels einer Laminierung 19 miteinander verbunden. Die Statorelemente 13 werden auch als beabstandete Zähne des Linearmotorsystems 10 bezeichnet (vgl. die Darstellungen in Fig. 3A bis 4C).

Außerdem umfasst das Linearmotorsystem 10 einen Läufer 21, der als Magnetelement Permanentmagnete 23 aufweist, die jeweils einen magnetischen Pol des Läufers bilden. Es versteht sich, dass der in den Figuren dargestellte zweipolige Läufer 21 lediglich der vereinfachten Darstellung dient. Es sind auch Läufer 21 mit höherer Polzahl möglich. Durch die Aktivierung der Magnetspulen 15 in einem oder mehreren Statorelementen 13 wird der Läufer 21 entlang des Stators 11 bzw. der Statorelemente 13 bewegt. Um den Läufer 21 anzutreiben, ist ein Abstand τₚ zwischen senkrecht zur Bewegungsrichtung des Läufers 21 ausgerichteten Mittelachsen der Permanentmagnete 23 des Läufers 21 von einem Abstand τₙ zwischen senkrecht zur Bewegungsrichtung des Läufers 21 ausgerichteten Mittelachsen der Statorelemente verschieden. Bei einem zweipoligen Läufer 21 ist üblicherweise τₚ etwa 1,5-mal so groß wie τₙ, d.h. 2 τₚ ≈ 3 τₙ.

Bei dem in Fig. 1 dargestellten Linearmotorsystem 10 handelt es sich ferner um ein Linearmotorsystem mit longitudinalem magnetischem Fluss. Das bedeutet, dass sich der magnetische Fluss der Statorelemente 13 im Wesentlichen in Bewegungsrichtung des Läufers 21 erstreckt. Darüber hinaus umfasst das Linearmotorsystem 10 nicht dargestellte Führungselemente für den Läufer 21 (wie z.B. Schienen), um eine Bewegungsbahn für den Läufer 21 festzulegen. Die Statorelemente 13 sind unterhalb der Führungselemente angeordnet.

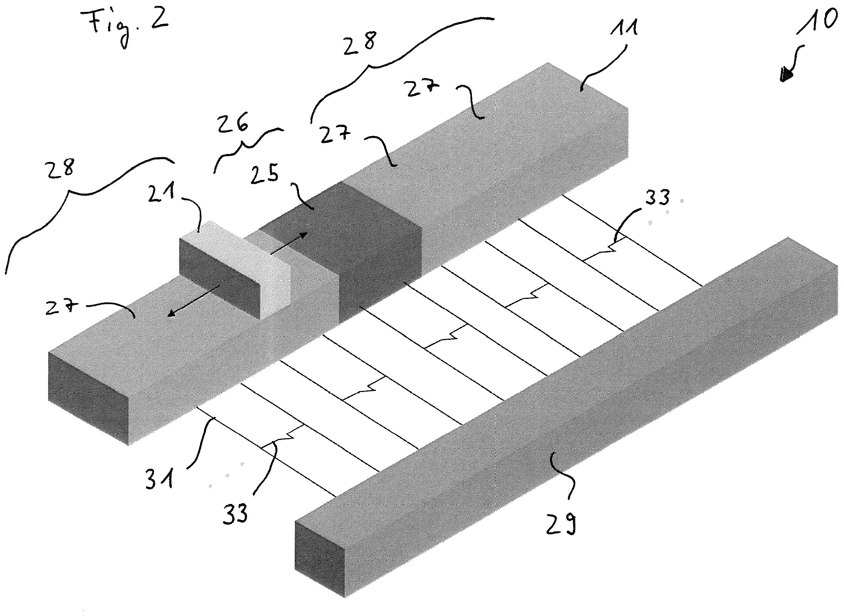

In Fig. 2 ist ein Abschnitt eines beispielhaften Linearmotorsystems 10 dargestellt. Der Stator 11 des Linearmotorsystems 10 umfasst in diesem Abschnitt Statorelemente 13, die sich von den übrigen Statorelementen 13 außerhalb des dargestellten Abschnitts unterscheiden. Die Statorelemente 13 im dargestellten Abschnitt umfassen einerseits ein ausgewähltes Statorelement 25, das eine Haltezone 26 für den Läufer 21 definiert, sowie mehrere Statorelemente 27, die jeweils eine Bremszone 28 auf beiden Seiten der Haltezone 26 definieren. Die mehreren Statorelemente 27 dienen somit zum Bremsen des Läufers 21, während das ausgewählte Statorelement 25 als Halteraste wirkt und zum Rasten des Läufers 21 vorgesehen ist.

Zur Steuerung des ausgewählten Statorelements 25 und der mehreren Statorelemente 27 kann das Linearmotorsystem 10 eine Steuereinheit 29 umfassen, die mittels elektrischer Verbindungen 31 mit den Statorelementen 25, 27 gekoppelt ist. Im Bereich der elektrischen Verbindungen 31 können ferner Einrichtungen 33 zum Kurzschließen der Magnetspulen der jeweiligen Statorelemente 25, 27 dargestellt sein.

Mittels der Einrichtungen 33 zum Kurzschließen der Magnetspulen können die Statorelemente 25, 27 von einem aktiven Zustand, in welchem sie zum Antreiben des Läufers 21 vorgesehen sind, in einen passiven Zustand übergeführt werden, in welchem ihre Magnetspulen kurzgeschlossen sind und in welchem die Statorelemente 25, 27 daher eine Bremskraft auf den Läufer 21 ausüben. Die Kurzschlussströme der Statorspulen können dabei verwendet werden, um die kinetische Energie des Läufers 21 zu dissipieren bzw. um die kinetische Energie in Wärme umzuwandeln.

Die Einrichtungen 33 zum Kurzschließen der Magnetspulen können Halbleiterschalter sein, die einen selbstleitenden Halbleiter mit großer Bandlücke wie etwa Gallium-nitrid umfassen können. Durch die Verwendung solcher Halbleiterschalter, die eine kurze Leitungszeit und eine geringe Impedanz aufweisen, benötigt ein beispielhaftes Linearmotorsystem 10 keine Wärmesenke, um die Wärme abzuleiten, die durch das Dissipieren der kinetischen Energie des Läufers 21 entsteht.

Ferner sind die Einrichtungen 33 zum Kurzschließen der Magnetspulen zwischen der Steuereinheit 29 und dem Stator 11 des beispielhaften Linearmotorsystems 10 dargestellt, da die Einrichtungen 33 auf zwei unterschiedliche Weisen in das Linearmotorsystem 10 integriert werden können. Einerseits können die Einrichtungen 33 zum Kurzschließen der Magnetspulen in die Steuereinheit 29 integriert sein. In diesem Fall unterscheiden sich die Statorelemente 27 in den Bremszonen 28 nicht von den übrigen Statorelementen 13 des Stators 11. Da die Einrichtungen 33 bei der vorliegenden Ausführungsform als Halbleiterschalter ausgebildet sind, können die Einrichtungen 33 auch alternativ in die Statorelemente 25, 27 integriert sein. Dadurch kann die Steuereinheit 29 vereinfacht werden, da die Funktionalität zum Kurzschließen der Magnetspulen sozusagen in den Stator 11 ausgelagert ist.

Darüber hinaus können die Einrichtungen 33 zum Kurzschließen der Magnetspulen derart in die Ansteuerung der Statorelemente 25, 27 integriert sein, dass die Halbleiterschalter beim Ausschalten der Steuereinheit 29, d.h. auch bei einem Stromausfall, geschlossen sind, so dass auch die Magnetspulen der Statorelemente 25, 27 beim Abschalten bzw. einem Ausfall der Steuereinheit 29 kurzgeschlossen werden. Dadurch kann das Linearmotorsystem 10 über eine automatische Sicherheitsfunktion verfügen, da der Läufer 21 beispielsweise bei einem Stromausfall aufgrund der kurzgeschlossenen Magnetspulen der Statorelemente 25, 27 automatisch abgebremst wird. Wenn das Linearmotorsystem 10 mehrere Läufer 21 aufweist, können durch diese Sicherungsfunktion beispielsweise unerwünschte Kollisionen mehrerer Läufer 21 vermieden werden.

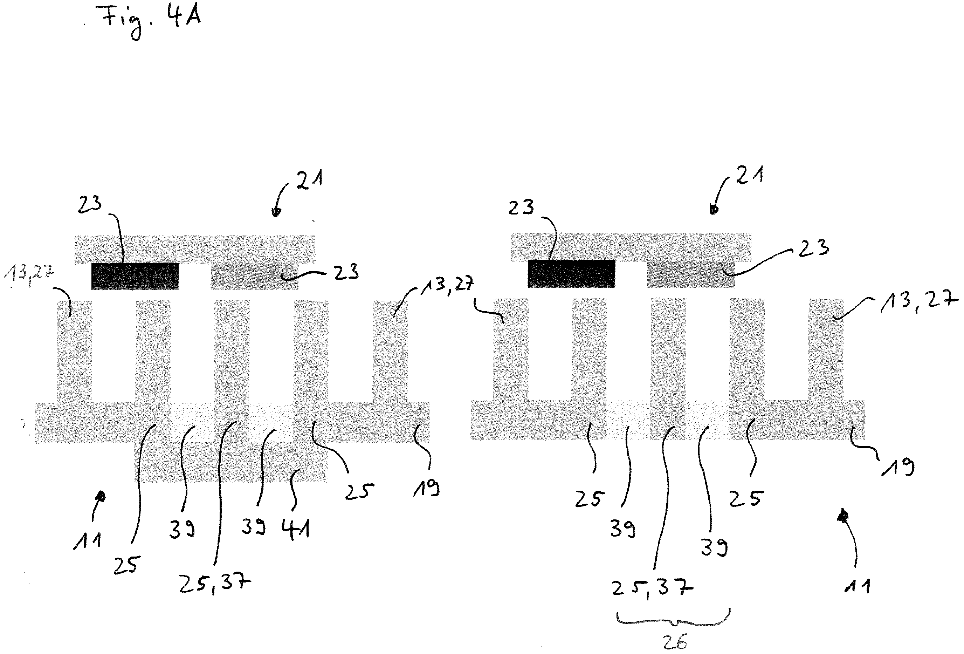

Das ausgewählte Statorelement 25 in der Haltezone 26 kann sich darüber hinaus bezüglich des magnetischen Flusses unterscheiden, der durch dieses erzeugt wird, von den mehreren Statorelementen 27 in der Bremszone 28. Durch den veränderten magnetischen Fluss in der Haltezone 26 kann das ausgewählte Statorelement 25 eine Haltekraft auf den Läufer 21 ausüben, wenn sich der Läufer 21 im Bereich des ausgewählten Statorelements 25 bzw. in der Haltezone 26 befindet und zuvor mittels der mehreren Statorelemente 27 in der Bremszone 28 ausreichend abgebremst wurde. Der Unterschied zwischen dem ausgewählten Statorelement 25 in der Haltezone 26 und den mehreren Statorelementen 27 in der Bremszone 28 wird nachstehend anhand der in Fig. 3A bis 3C und 4A bis 4C dargestellten Ausführungsbeispiele und Ausführungsformen erläutert.

Fig. 3A zeigt eine schematische Seitenansicht von Abschnitten eines beispielhaften Linearmotorsystems 10 mit dem Stator 11 und dem Läufer 21. Auf der linken Seite ist die Anordnung der Statorelemente 13 im Normalbetrieb bzw. außerhalb der Bremszone 28 und der Haltezone 26 dargestellt.

Im Normalbetrieb ist der Abstand τₙ zwischen den Statorelementen 13 bzw. Zähnen des Linearmotorsystems 10, d.h. der Abstand zwischen deren Mittelachsen senkrecht zur Bewegungsrichtung des Läufers 21, vom Abstand τₚ zwischen den entsprechenden Mittelachsen der Permanentmagnete 23 des Läufers 21 verschieden. Im vorliegenden Fall gilt 2 τₚ ≈ 3 τₙ, wie vorstehend bereits im Zusammenhang mit Fig. 1 erläutert wurde. Der Läufer 21 wird relativ zu den Statorelementen 13 bewegt, wenn die Statorelemente 13 aktiviert werden. Die Bewegung bzw. der Antrieb des Läufers 21 resultiert aus einer Wechselwirkung des mit den Magnetspulen der Statorelemente 13 erzeugten magnetischen Flusses mit dem Magnetelement bzw. den Permanentmagneten 23 des Läufers 21.

Bei dem in Fig. 3A bis 3C dargestellten beispielhaften Linearmotorsystem 10 handelt es sich um ein Linearmotorsystem mit longitudinalem magnetischem Fluss der Statorelemente 13, welcher sich im Wesentlichen in Bewegungsrichtung des Läufers 21 erstreckt. Bei einem solchen Linearmotorsystem 10 lässt sich eine Haltezone derart realisieren, wie dies in der Ausführungsform auf der rechten Seite von Fig. 3A dargestellt ist.

Bei diesem Ausführungsbeispiel sind zwei ausgewählte Statorelemente 25 bzw. Zähne im Vergleich zu den übrigen Statorelementen 13 bzw. 27 derart verschoben, dass der Abstand zwischen den ausgewählten Statorelementen 25 dem Abstand zwischen den Mittelachsen der Permanentmagnete 23 des Läufers 21 entspricht. Somit gilt für die ausgewählten Statorelemente 25 in diesem Fall τₚ ≈ τₙ. Wenn der Läufer 21 zuvor mittels der Statorelemente 27 in der Bremszone 28 ausreichend abgebremst wurde oder sich im Stillstand befindet, können die ausgewählten Statorelemente 25 aufgrund ihres vergrößerten Abstands, der dem Abstand der Permanentmagnete 23 des Läufers 21 entspricht, eine magnetische Anziehungskraft bzw. Haltekraft auf den Läufer 21 ausüben.

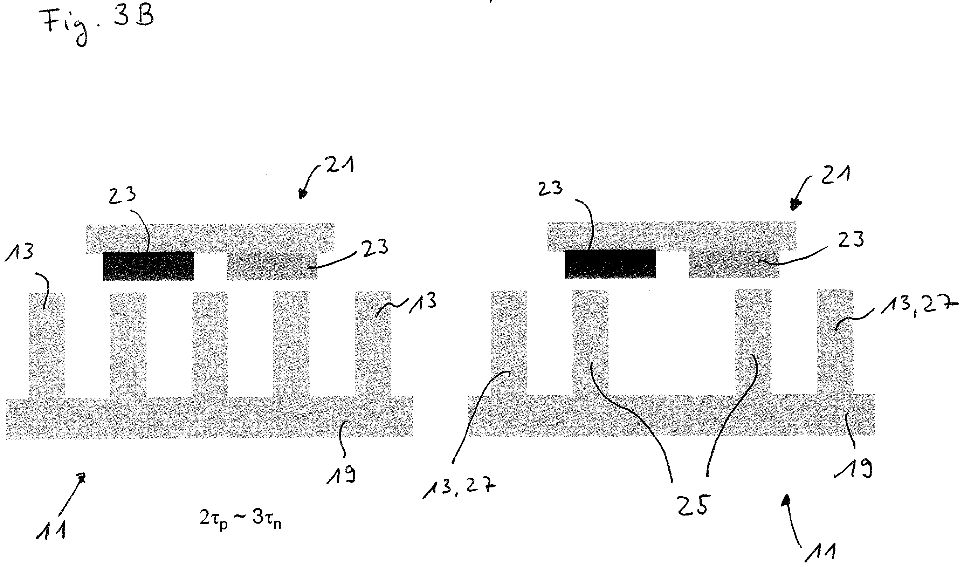

Bei dem in Fig. 3B dargestellten weiteren Ausführungsbeispiel ist der Abstand zwischen den zwei ausgewählten Statorelementen 25 im Vergleich zum Abstand der ausgewählten Statorelemente 25 von Fig. 3A weiter vergrößert, so dass der Abstand zwischen den ausgewählten Statorelementen 25 nunmehr doppelt so groß wie der Abstand τₙ zwischen den weiteren Statorelementen 13, 27 ist. Mit anderen Worten fehlt bei dem in Fig. 3B dargestellten Ausführungsbeispiel eines der Statorelemente 13 bzw. einer der Zähne. Obwohl der Abstand zwischen den ausgewählten Statorelementen 25 im Vergleich zu Fig. 3A nicht mehr dem Abstand der Permanentmagnete 23 des Läufers 21 entspricht, wird dennoch aufgrund des Fehlens eines Statorelements 13 eine ausreichende Haltekraft auf den Läufer 21 ausgeübt. Fig. 3A und 3B zeigen somit ausgewählte Statorelemente 25, welche dauerhaft in dem zweiten Zustand sind.

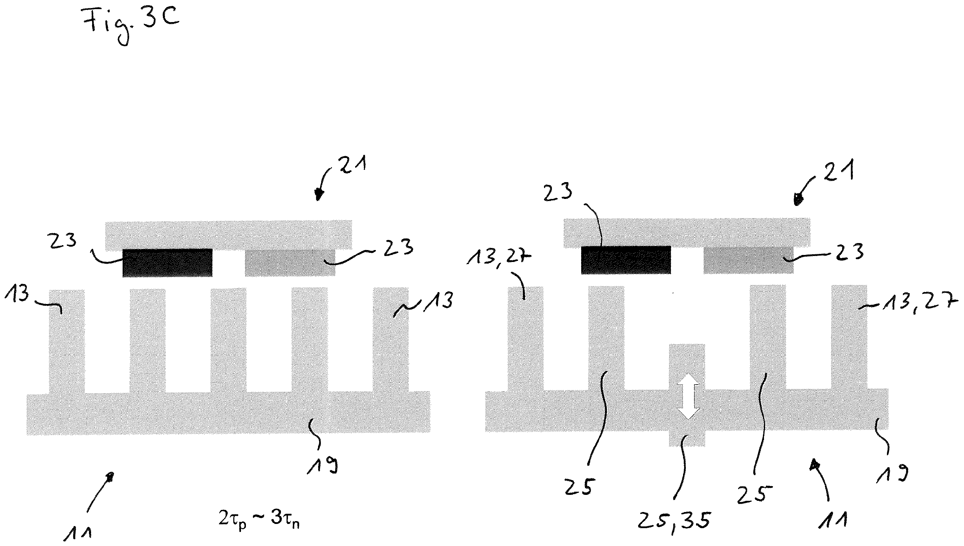

Ein weiteres Ausführungsbeispiel des Linearmotorsystems 10 von Fig. 3C zeigt hingegen ausgewählte Statorelemente 25, von denen ein Statorelement 35 bzw. Zahn derart bewegbar ist, dass es bzw. er aus der Reihe der weiteren Statorelemente 13, 25, 27 zumindest teilweise entfernt werden kann. Das entfernbare Statorelement 35 ist somit zwischen zwei Zuständen umschaltbar, wobei es im ersten Zustand zwischen den weiteren Statorelementen 13, 25, 27 angeordnet ist und somit auf identische Weise wie diese betrieben wird. Der erste Zustand entspricht somit einem Normalbetrieb des Linearmotorsystems 10, bei dem die Haltezone 26 deaktiviert ist. Im zweiten Zustand hingegen befindet sich das entfernbare Statorelement 35 nicht mehr zwischen den weiteren Statorelementen 13, 25, 27, so dass der zweite Zustand der in Fig. 3B dargestellten Ausführungsform mit fehlendem Zahn entspricht. Im zweiten Zustand üben die weiteren ausgewählten Statorelemente 25, die auf beiden Seiten des entfernbaren Statorelements 35 angeordnet sind, auf die gleiche Weise eine Haltekraft auf den Läufer 21 aus, wie dies vorstehend für die Ausführungsform von Fig. 3B beschrieben ist.

Auf der linken Seite von Fig. 3B und 3C ist die Anordnung von der linken Seite von Fig. 3A jeweils nochmals dargestellt, d.h. ein Abschnitt des Linearmotors 10 ohne ein verschobenes, entferntes oder entfernbares Statorelement 13, 25 bzw. 35 und somit ohne Haltezone 26, um den Vergleich der jeweiligen Ausführungsform mit dieser Anordnung für den Normalbetrieb des Linearmotors 10 zu vereinfachen.

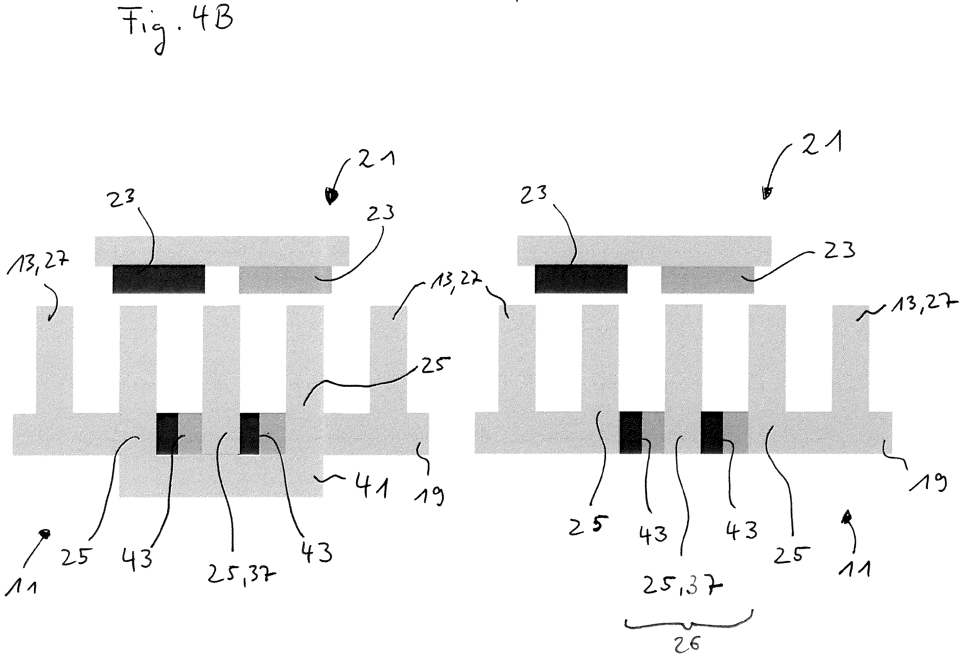

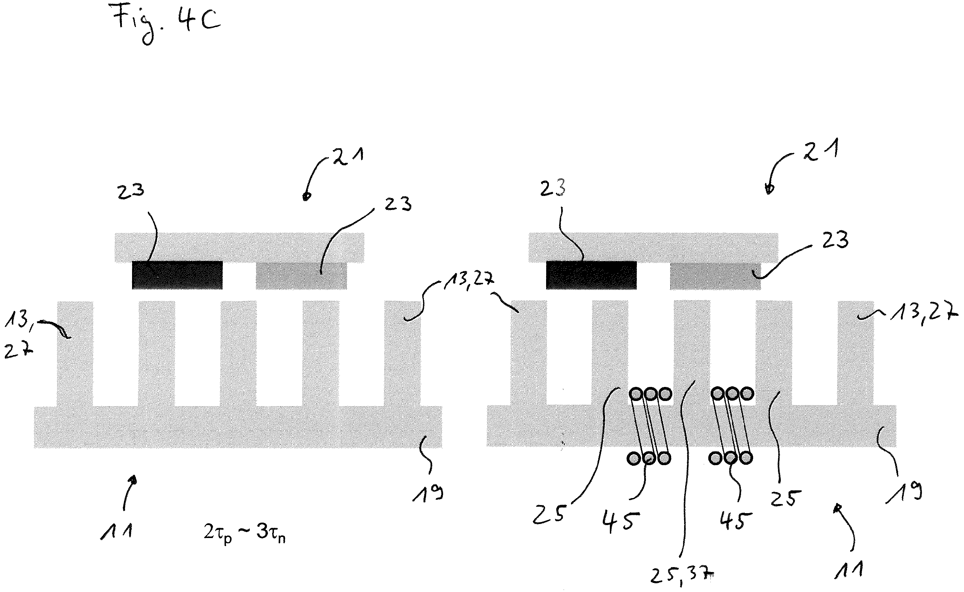

Fig. 4A und 4C zeigen Ausführungsbeispiele eines Linearmotorsystems und Fig. 4B zeigt eine Ausführungsform des erfindungsgemäßen Linearmotorsystems 10, bei welchen das Linearmotorsystem mit transversalem magnetischem Fluss der Statorelemente 13 ausgebildet ist, der sich im Wesentlichen rechtwinklig zur Bewegungsrichtung des Läufers 21 erstreckt. Hierbei ist eines der ausgewählten Statorelemente 25 gegenüber den benachbarten Statorelementen magnetisch isoliert und wird daher als magnetisch isolierbares Statorelement 37 bezeichnet. Die magnetische Isolierung des Elements 37 bewirkt bei dem Linearmotorsystem 10 mit transversalem magnetischem Fluss, dass eine Lücke zwischen den Statorelementen 13, 25, 27 entsteht, die mit dem Magnetelement bzw. dem Permanentmagneten 23 des Läufers 21 wechselwirken. Durch diese Lücke üben die benachbarten Statorelemente 25 des isolierten Statorelements auf eine ähnliche Art eine Haltekraft auf den Läufer 21 aus wie bei dem Ausführungsbeispiel von Fig. 3B für ein Linearmotorsystem 10 mit longitudinalem magnetischem Fluss, bei dem ein Statorelement entfernt ist.

Bei dem in Fig. 4A dargestellten Ausführungsbeispiel ist die Laminierung 19 des Stators 11 durch zwei nichtmagnetische Verbindungen 39 unterbrochen, um das Statorelement 37 gegenüber den benachbarten Statorelementen 25 magnetisch zu isolieren. Aufgrund der durch die benachbarten Statorelemente 25 ausgeübten Haltekraft auf den Läufer 21 bilden die Statorelemente 25, 37 eine Haltezone 26 entlang des Stators 11. Diese Haltezone 26 kann jedoch mittels einer Überbrückungseinrichtung 41 deaktiviert werden, die in der Darstellung auf der linken Seite von Fig. 4A gezeigt ist. Mittels der Überbrückungseinrichtung 41 können die nichtmagnetischen Verbindungen 39 überbrückt werden, so dass sich das Statorelement 37 nicht mehr von den benachbarten Statorelementen 13, 25 unterscheidet. Mit anderen Worten wird das ausgewählte Statorelement 25, 37 mittels der Überbrückungseinrichtung 41 zwischen einem ersten Zustand, bei welchem die magnetische Isolierung bezogen auf die benachbarten Statorelemente 25 aufgehoben ist und welcher in Fig. 4A auf der linken Seite dargestellt ist, und einem zweiten Zustand umgeschaltet, in dem das Statorelement 37 gegenüber den benachbarten Statorelementen 25 magnetisch isoliert ist, so dass diese eine Haltekraft auf den Läufer 21 ausüben.

Bei der in Fig. 4B dargestellten erfindungsgemäßen Ausführungsform sind die nichtmagnetischen Verbindungen 39 von Fig. 4A durch Permanentmagnete 43 ersetzt. Die Permanentmagnete 43 sorgen somit ebenso wie die nichtmagnetischen Verbindungen 39 für eine magnetische Isolierung des Statorelements 37 gegenüber den benachbarten Statorelementen 25. Die benachbarten ausgewählten Statorelemente 25 üben somit wiederum eine Haltekraft auf den Läufer 21 aus und definieren somit eine Haltezone 26 entlang des Stators 11. Diese Haltezone kann ebenso wie bei der in Fig. 4A dargestellten Ausführungsform mittels einer Überbrückungseinrichtung 41 aufgehoben werden, wie dies auf der linken Seite von Fig. 4B dargestellt ist.

Ferner sind bei dem in Fig. 4C dargestellten Ausführungsbeispiel die nichtmagnetischen Verbindungen 39 von Fig. 4A und die Permanentmagnete 43 von Fig. 4B durch Elektromagnete 45 ersetzt, die jeweils auf beiden Seiten des Statorelements 37 angeordnet sind. Durch eine Aktivierung der Elektromagneten 45 wird das Statorelement 37 wiederum gegenüber den benachbarten ausgewählten Statorelementen 25 magnetisch isoliert, so dass diese eine Haltekraft auf den Läufer 21 ausüben. Wenn die Elektromagnete 45 hingegen deaktiviert sind, kann sich das Statorelement 37 nicht von den weiteren Statorelementen 13, 25, 27 unterscheiden, wie dies auf der linken Seite von Fig. 4C dargestellt ist. Bei der in Fig. 4C dargestellten Ausführungsbeispiel ist somit keine Überbrückungseinrichtung 41 zwischen den Statorelementen 25 erforderlich. Stattdessen werden die ausgewählten Statorelemente 25, 37 durch Aktivierung und Deaktivierung der Elektromagnete 45 zwischen dem ersten Zustand ohne Haltekraft und dem zweiten Zustand mit Haltekraft für den Läufer 21 umgeschaltet.

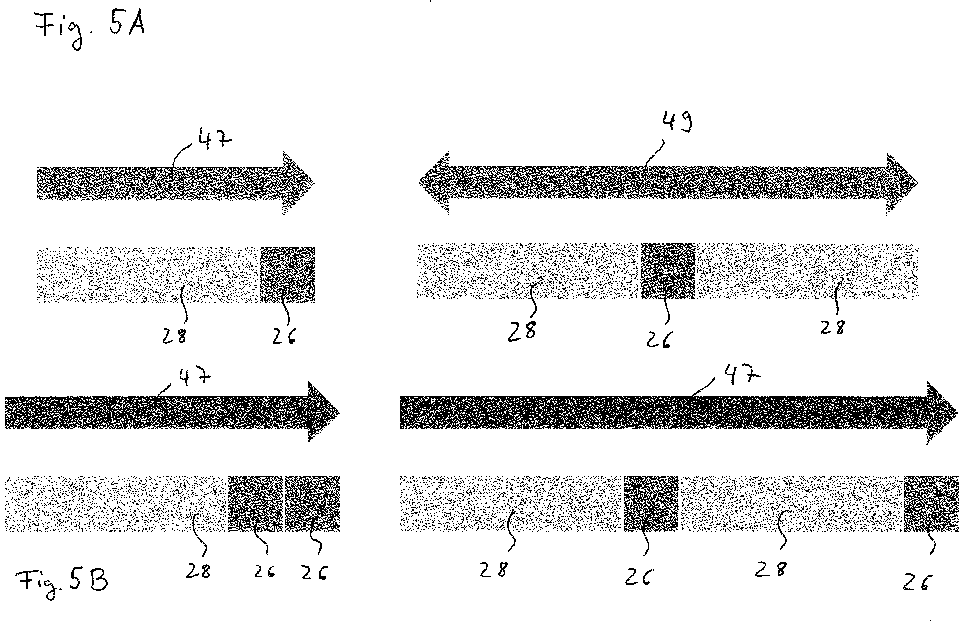

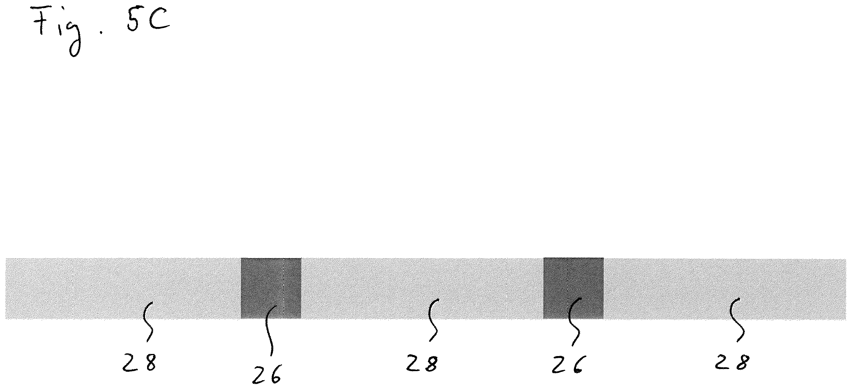

In Fig. 5A, 5B und 5C sind unterschiedliche Anordnungen von Bremszonen 28 und Haltezonen 26 entlang eines beispielhaften Linearmotorsystems 10 dargestellt. Wenn lediglich eine unidirektionale Bewegung des Läufers 21 vorgesehen ist, die in Fig. 5A bis C durch den Pfeil 47 angedeutet ist und bei der sich der Läufer 21 beispielsweise entlang einer geschlossenen Bahn bewegt, genügt eine Abfolge einer einzigen, ausreichend langen Bremszone 28 und einer Haltezone 26, um die gewünschte Brems- und Haltefunktionalität zu realisieren. Wenn jedoch eine bidirektionale Bewegung des Läufers 21 erfolgt, wie dies auf der rechten Seite von Fig. 5A durch den Doppelpfeil 49 angedeutet ist, befindet sich auf beiden Seiten der Haltezone 26 eine jeweilige Bremszone 28.

Bei dem in Fig. 5B dargestellten Ausführungsbeispiel sind zusätzliche Sicherungsfunktionen dadurch realisiert, dass eine zusätzliche, redundante Haltezone 26 eingerichtet ist (vgl. die linke Seite von Fig. 5B) oder dass eine doppelte Abfolge von Bremszone 28 und Haltezone 26 vorgesehen ist, d.h. eine weitere Bremszone 28, die auf eine Haltezone 26 folgt, sowie eine weitere Haltezone 26, die sich an die weitere Bremszone 28 anschließt (vgl. die rechte Seite von Fig. 5B).

Bei der Anordnung von Fig. 5C ist eine Bremszone 28 zwischen zwei Haltezonen 26 vorgesehen, und außerhalb dieser Haltezonen 26 befindet sich eine jeweilige weitere Bremszone 28. Mit einer solchen Anordnung kann der Läufer 21 zwischen den beiden Haltezonen 26 eingeschlossen werden.

Eine weitere Sicherungsfunktion, beispielsweise zusätzlich zu den in Fig. 5B dargestellten redundanten Halte- und Bremszonen 26, 28, lässt sich dadurch erreichen, dass die Elemente zum Ansteuern der Statorelemente 13 wie beispielsweise die Einrichtungen 33 (vgl. mit Fig. 2) zum Kurzschließen der Magnetspulen solche Einrichtungen sind, die in einem passiven Zustand eingeschaltet, d.h. leitend sind. Das bedeutet, dass diese Einrichtungen bei der Aktivierung nichtleitend sind und dadurch auch dann aktiviert werden, wenn Ströme und/oder Spannungen ausgeschaltet sind, beispielsweise bei einem Stromausfall.

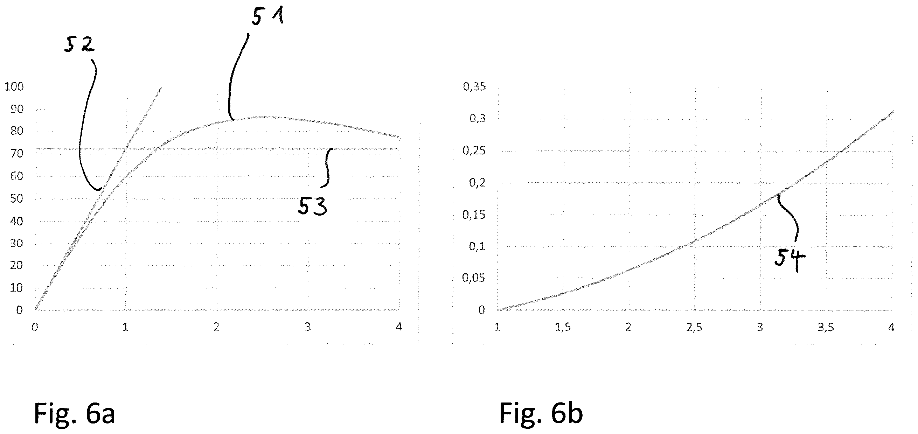

In Fig. 6A und 6B sind Ergebnisse von Simulationsrechnungen für die Bremskraft bei einem beispielhaften Linearmotorsystem dargestellt, welche die ausgewählten Statorelemente 25 auf den Läufer 21 ausüben. Dabei wird von einer Anordnung ausgegangen, wie sie in Fig. 3A auf der rechten Seite dargestellt ist. Der Abstand τₚ zwischen den Mittelachsen der Permanentmagnete 23 des Läufers 21 entspricht somit dem Abstand zweier Statorelemente 25 in Bewegungsrichtung des Läufers. Außerdem wird bei den Simulationsrechnungen angenommen, dass die Geschwindigkeit des Läufers 21, das Magnetfeld der Permanentmagnete 23 im Luftspalt und die Ströme durch die Magnetspulen der Statorelemente 25 in den Nuten senkrecht zueinander sind. Darüber hinaus wird angenommen, dass der Betrag des Magnetfeldes an der Oberfläche der Permanentmagnete 23 konstant ist.

In Fig. 6A ist die auf den Läufer ausgeübte Kraft in N an der y-Achse über der Geschwindigkeit des Läufers 21 in m/s an der x-Achse für ein beispielhaftes Linearmotorsystem aufgetragen. Die Kurve 51 zeigt das Ergebnis eines komplexen Vektormodells, während die Kurve 52 das Ergebnis eines quasistationären Modells ist und die Kurve 53 eine konstante Kraft darstellt. Die Kurve 51 kann somit bei Geschwindigkeiten bis 1 m/s in guter Näherung durch die Kurve 52 des quasistationären Modells angenähert werden, sowie bei größeren Geschwindigkeiten als 1 m/s durch die konstante Kraft 53.

In Fig. 6B ist die erforderliche Länge einer Bremszone zum Abbremsen eines Läufers mit einer Masse von 3 kg für Geschwindigkeiten größer als 1 m/s, die an der x-Achse aufgetragen sind, durch die Kurve 54 für ein beispielhaftes Linearmotorsystem dargestellt. Dabei ist die erforderliche Länge in Metern an der y-Achse aufgetragen. Die Simulationsrechnungen zeigen, dass für die angegebenen Geschwindigkeiten von bis zu 4 m/s eine relativ kurze Bremszone mit einer Länge von weniger als 0,35 m erforderlich ist und an einem ausgewählten Statorelement 25 die Bremskraft zum Bremsen und Halten des beispielhaften Läufers 21 mit einer Masse von 3 kg ausreicht.

### Bezuqszeichenliste

- 10: Linearmotorsystem
- 11: Stator
- 13: Statorelement
- 15: Magnetspule
- 17: magnetischer Kern
- 19: Laminierung
- 21: Läufer
- 23: Permanentmagnet
- τₚ: Abstand zweier magnetischer Pole im Läufer
- τₙ: Abstand zweier magnetischer Pole im Stator
- 25: ausgewähltes Statorelement
- 26: Haltezone
- 27: Statorelemente der Bremszone
- 28: Bremszone
- 29: Steuereinheit
- 31: elektrische Verbindungen
- 33: Einrichtung zum Kurzschließen
- 35: entfernbares Statorelement
- 37: magnetisch isolierbares Statorelement
- 39: nichtmagnetische Verbindung
- 41: Überbrückungseinrichtung
- 43: Permanentmagnet
- 45: Elektromagnet
- 47: Pfeil
- 49: Doppelpfeil
- 51: Kurve der Bremskraft für komplexes Vektormodell
- 52: Kurve der Bremskraft für quasistationäres Modell
- 53: konstante Kraft
- 54: Kurve für die Länge der Bremszone

## Patentansprüche

1. Linearmotorsystem (10) mit
einem Stator (11) mit mehreren Statorelementen (13), die jeweils eine Magnetspule (15) und einen magnetischen Kern (17) aufweisen, wobei die Magnetspule (15) einen transversalen magnetischen Fluss in dem jeweiligen Statorelement (13) erzeugt,
zumindest einem Läufer (21), welcher zumindest ein Magnetelement (23) aufweist, das mit der jeweiligen Magnetspule (15) der Statorelemente (13) in Wechselwirkung steht, wobei der Läufer (21) mittels Aktivierung zumindest eines Statorelements (13) in einer Bewegungsrichtung relativ zu den Statorelementen (13) bewegt wird,
wobei zumindest ein ausgewähltes Statorelement (25) ausgebildet ist, um bezüglich des magnetischen Flusses von einem ersten Zustand in einen zweiten Zustand zu wechseln, während die übrigen Statorelemente (13) bezüglich des magnetischen Flusses in dem ersten Zustand bleiben, **dadurch gekennzeichnet, dass**
das zumindest eine ausgewählte Statorelement (25) bezüglich des magnetischen Flusses dadurch zum Wechseln zwischen dem ersten und dem zweiten Zustand ausgebildet ist, dass das zumindest eine ausgewählte Statorelement (25) ein magnetisch isolierbares Statorelement (37) ist, wobei zwischen dem magnetisch isolierbaren Statorelement (37) und zu diesem magnetisch isolierbaren Statorelement (37) entlang des Stators (11) beiderseits benachbarten jeweiligen Statorelementen (25) Permanentmagnete (43) angeordnet sind, um im zweiten Zustand das magnetisch isolierbare Statorelement (37) gegenüber den zu diesem magnetisch isolierbaren Statorelement (37) entlang des Stators (11) beiderseits benachbarten jeweiligen Statorelementen (25) magnetisch zu isolieren und um aufgrund der durch die zu diesem magnetisch isolierbaren Statorelement (37) entlang des Stators (11) beiderseits benachbarten jeweiligen Statorelemente (25) auf den Läufer (21) ausgeübten Haltekraft eine Haltezone (26) für den Läufer (21) entlang des Stators (11) zu bilden, wobei die Haltezone (26) für den Läufer (21) mittels
einer Überbrückungseinrichtung (41) deaktivierbar ist, um durch die Aufhebung der magnetischen Isolierung des magnetisch isolierbaren Statorelements (37) gegenüber den zu diesem magnetisch isolierbaren Statorelement (37) entlang des Stators (11) beiderseits benachbarten jeweiligen Statorelementen in den ersten Zustand zu wechseln.

2. Linearmotorsystem (10) nach Anspruch 1,
**dadurch gekennzeichnet, dass** mehrere Statorelemente (27), die ausgebildet sind, um bezüglich des magnetischen Flusses derart zwischen einem aktiven Zustand und einem passiven Zustand zu wechseln, dass die mehreren Statorelemente (27) eine Bremskraft auf den Läufer (21) ausüben.

3. Linearmotorsystem (10) nach Anspruch 2,
**gekennzeichnet durch**
eine Steuereinheit (29), die das Wechseln des zumindest einen ausgewählten Statorelements (25) zwischen dem ersten und dem zweiten Zustand und/oder das Wechseln der mehreren Statorelemente (27) zwischen dem aktiven und dem passiven Zustand steuert.

4. Linearmotorsystem (10) nach Anspruch 2 oder 3,
**gekennzeichnet durch**
eine Einrichtung (33) zum Kurzschließen der Magnetspulen (15) des zumindest einen ausgewählten Statorelements (25) und/oder der mehreren Statorelemente (27),
wobei das Wechseln der mehreren Statorelemente (27) und/oder des ausgewählten Statorelements (25) von dem aktiven in den passiven Zustand durch das Kurzschließen der jeweiligen Magnetspulen (15) erfolgt.

5. Linearmotorsystem (10) nach Anspruch 3 und 4,
**dadurch gekennzeichnet, dass** die Einrichtung (33) zum Kurzschließen der Magnetspulen (15) in die Steuereinheit (29) integriert ist.

6. Linearmotorsystem (10) nach Anspruch 4,
**dadurch gekennzeichnet, dass**
die Einrichtung (33) zum Kurzschließen der Magnetspulen (15) im Bereich der Statorelemente (13, 25, 27) angeordnet ist.

7. Linearmotorsystem (10) nach zumindest einem der Ansprüche 4 bis 6,
**dadurch gekennzeichnet, dass**
die Einrichtung (33) zum Kurzschließen der Magnetspulen (15) in einem passiven Zustand eingeschaltet ist.

8. Linearmotorsystem (10) nach zumindest einem der vorstehenden Ansprüche,
**dadurch gekennzeichnet, dass**
zumindest ein ausgewähltes Statorelement (25), welches dauerhaft den zweiten Zustand aufweist, dadurch gebildet ist, dass das Statorelement (25) verkleinert ausgebildet ist oder einen unterschiedlichen Abstand zu anderen Statorelementen (25) aufweist oder dass das Statorelement (25) fehlt.

9. Linearmotorsystem (10) nach zumindest einem der vorstehenden Ansprüche,
**dadurch gekennzeichnet, dass**
der Abstand zwischen Magnetpolen zweier Statorelemente (13, 27), die jeweils neben dem zumindest einen ausgewählten Statorelement (25) angeordnet sind, in Bewegungsrichtung des Läufers (21) gleich dem Abstand zweier Magnetpole in dem Magnetelement (23) des Läufers (21) ist.

10. Linearmotorsystem (10) nach zumindest einem der vorstehenden Ansprüche,
**dadurch gekennzeichnet, dass**
das zumindest eine ausgewählte Statorelement (25) dadurch zum Wechseln zwischen dem ersten und dem zweiten Zustand ausgebildet ist, dass ein Statorelement (35) entfernbar und/oder deaktivierbar ist.

11. Linearmotorsystem (10) nach zumindest einem der Ansprüche 1 bis **dadurch gekennzeichnet, dass** das Linearmotorsystem (10) ein Linearmotorsystem mit transversalem magnetischem Fluss ist, bei dem sich der magnetische Fluss der Statorelemente (13) rechtwinklig zur Bewegungsrichtung des Läufers (21) erstreckt.

## Claims

1. A linear motor system (10) comprising
a stator (11) having a plurality of stator elements (13) which each have a magnetic coil (15) and a magnetic core (17), wherein the magnetic coil (15) generates a transverse magnetic flux in the respective stator element (13);
at least one mover (21) which has at least one magnetic element (23) which interacts with the respective magnetic coil (15) of the stator elements (13), wherein the mover (21) is moved by means of activation of at least one stator element (13) in a direction of movement relative to the stator elements (13),
wherein at least one selected stator element (25) is configured to change from a first state into a second state with respect to the magnetic flux, while the other stator elements (13) remain in the first state with respect to the magnetic flux,
**characterized in that**
the at least one selected stator element (25) is configured to change between the first state and the second state with respect to the magnetic flux **in that** the at least one selected stator element (25) is a magnetically insulatable stator element (37), with permanent magnets (43) being arranged between the magnetically insulatable stator element (37) and respective stator elements (25) adjacent at both sides to this magnetically insulatable stator element (37) along the stator (11) in order, in the second state, to magnetically insulate the magnetically insulatable stator element (37) with respect to the respective stator elements (25) adjacent at both sides to this magnetically insulatable stator element (37) along the stator (11) and to form a holding zone (26) for the mover (21) along the stator (11) due to the holding force exerted on the mover (21) by the respective stator elements (25) adjacent at both sides to this magnetically insulatable stator element (37) along the stator (11), with the holding zone (26) for the mover (21) being able to be deactivated by means of a bridging device (41) in order to change into the first state by the cancelation of the magnetic insulation of the magnetically insulatable stator element (37) with respect to the respective stator elements adjacent at both sides to this magnetically insulatable stator element (37) along the stator (11).

2. A linear motor system (10) in accordance with claim 1,
**characterized by**
a plurality of stator elements (27) which are configured to change between an active state and a passive state with respect to the magnetic flux such that the plurality of stator elements (27) exert a braking force on the mover (21).

3. A linear motor system (10) in accordance with claim 2,
**characterized by**
a control unit (29) which controls the change of the at least one selected stator element (25) between the first state and the second state and/or the change of the plurality of stator elements (27) between the active state and the passive state.

4. A linear motor system (10) in accordance with claim 2 or claim 3,
**characterized by**
a device (33) for short-circuiting the magnetic coils (15) of the at least one selected stator element (25) and/or of the plurality of stator elements (27),
with the change of the plurality of stator elements (27) and/or of the selected stator element (25) from the active state into the passive state taking place by the short-circuiting of the respective magnetic coils (15).

5. A linear motor system (10) in accordance with claim 3 and claim 4, **characterized in that**
the device (33) for short-circuiting the magnetic coils (15) is integrated in the control unit (29).

6. A linear motor system (10) in accordance with claim 4,
**characterized in that**
the device (33) for short-circuiting the magnetic coils (15) is arranged in the region of the stator elements (13, 25, 27).

7. A linear motor system (10) in accordance with at least one of the claims 4 to 6,
**characterized in that**
the device (33) for short-circuiting the magnetic coils (15) is switched on in a passive state.

8. A linear motor system (10) in accordance with at least one of the preceding claims,
**characterized in that**
at least one selected stator element (25) which permanently has the second state is formed **in that** the stator element (25) is reduced in size or has a different spacing from other stator elements (25) or **in that** the stator element (25) is missing.

9. A linear motor system (10) in accordance with at least one of the preceding claims,
**characterized in that**
the spacing between magnetic poles of two stator elements (13, 27) which are each arranged next to the at least one selected stator element (25) is equal to the spacing of two magnetic poles in the magnetic element (23) of the mover (21) in the direction of movement of the mover (21).

10. A linear motor system (10) in accordance with at least one of the preceding claims,
**characterized in that**
the at least one selected stator element (25) is configured to change between the first state and the second state **in that** a stator element (35) can be removed and/or deactivated.

11. A linear motor system (10) in accordance with at least one of the claims 1 to 10,
**characterized in that**
the linear motor system (10) is a linear motor system having a transverse magnetic flux in which the magnetic flux of the stator elements (13) extends at a right angle to the direction of movement of the mover (21).

## Revendications

1. Système de moteur linéaire (10), comportant
un stator (11) ayant plusieurs éléments de stator (13) qui comprennent chacun une bobine magnétique (15) et un noyau magnétique (17), la bobine magnétique (15) générant un flux magnétique transversal dans l'élément de stator respectif (13),
au moins un rotor (21) ayant au moins un élément magnétique (23) qui interagit avec la bobine magnétique respective (15) des éléments de stator (13), le rotor (21) étant déplacé dans une direction de déplacement par rapport aux éléments de stator (13) au moyen de l'activation d'au moins un élément de stator (13),
au moins un élément de stator sélectionné (25) étant réalisé pour passer d'un premier état à un deuxième état en ce qui concerne le flux magnétique, tandis que les autres éléments de stator (13) restent dans le premier état en ce qui concerne le flux magnétique,
**caractérisé en ce que**
ledit au moins un élément de stator sélectionné (25) est réalisé, en ce qui concerne le flux magnétique, pour passer entre le premier et le deuxième état du fait que ledit au moins un élément de stator sélectionné (25) est un élément de stator pouvant être isolé magnétiquement (37),
des aimants permanents (43) sont disposés entre l'élément de stator pouvant être isolé magnétiquement (37) et des éléments de stator respectifs (25) voisins de part et d'autre de cet élément de stator pouvant être isolé magnétiquement (37) le long du stator (11), pour isoler magnétiquement, dans le deuxième état, l'élément de stator pouvant être isolé magnétiquement (37) par rapport aux éléments de stator respectifs (25) voisins de part et d'autre de cet élément de stator pouvant être isolé magnétiquement (37) le long du stator (11) et pour former une zone de maintien (26) pour le rotor (21) le long du stator (11) en raison de la force de maintien exercée sur le rotor (21) par les éléments de stator respectifs (25) voisins de part et d'autre de cet élément de stator pouvant être isolé magnétiquement (37) le long du stator (11),
la zone de maintien (26) pour le rotor (21) peut être désactivée au moyen d'un dispositif de pontage (41), afin de passer au premier état par la suppression de l'isolation magnétique de l'élément de stator pouvant être isolé magnétiquement (37) par rapport aux éléments de stator respectifs voisins de cet élément de stator pouvant être isolé magnétiquement (37) le long du stator (11).

2. Système de moteur linéaire (10) selon la revendication 1,
**caractérisé par**
plusieurs éléments de stator (27) qui sont réalisés pour passer entre un état actif et un état passif en ce qui concerne le flux magnétique, de telle sorte que lesdits plusieurs éléments de stator (27) exercent une force de freinage sur le rotor (21).

3. Système de moteur linéaire (10) selon la revendication 2,
**caractérisé par**
une unité de commande (29) qui commande le passage dudit au moins un élément de stator sélectionné (25) entre le premier et le deuxième état et/ou le passage desdits plusieurs éléments de stator (27) entre l'état actif et l'état passif.

4. Système de moteur linéaire (10) selon la revendication 2 ou 3,
**caractérisé par**
un dispositif (33) de court-circuitage des bobines magnétiques (15) dudit au moins un élément de stator sélectionné (25) et/ou desdits plusieurs éléments de stator (27),
le passage desdits plusieurs éléments de stator (27) et/ou de l'élément de stator sélectionné (25) de l'état actif à l'état passif étant effectué par le court-circuitage des bobines magnétiques respectives (15).

5. Système de moteur linéaire (10) selon les revendications 3 et 4, **caractérisé en ce que**
le dispositif (33) de court-circuitage des bobines magnétiques (15) est intégré dans l'unité de commande (29).

6. Système de moteur linéaire (10) selon la revendication 4,
**caractérisé en ce que**
le dispositif (33) de court-circuitage des bobines magnétiques (15) est disposé dans la zone des éléments de stator (13, 25, 27).

7. Système de moteur linéaire (10) selon l'une au moins des revendications 4 à 6,
**caractérisé en ce que**
le dispositif (33) de court-circuitage des bobines magnétiques (15) est allumé dans un état passif.

8. Système de moteur linéaire (10) selon l'une au moins des revendications précédentes,
**caractérisé en ce que**
au moins un élément de stator sélectionné (25) qui présente en permanence le deuxième état est formé par le fait que l'élément de stator (25) est réalisé de manière plus petite ou présente une distance différente par rapport à d'autres éléments de stator (25) ou que l'élément de stator (25) est absent.

9. Système de moteur linéaire (10) selon l'une au moins des revendications précédentes,
**caractérisé en ce que**
la distance entre les pôles magnétiques de deux éléments de stator (13, 27) disposés chacun à côté dudit au moins un élément de stator sélectionné (25), dans la direction de déplacement du rotor (21), est égale à la distance entre deux pôles magnétiques dans l'élément magnétique (23) du rotor (21).

10. Système de moteur linéaire (10) selon l'une au moins des revendications précédentes,
**caractérisé en ce que**
ledit au moins un élément de stator sélectionné (25) est réalisé pour passer entre le premier et le deuxième état du fait qu'un élément de stator (35) peut être retiré et/ou désactivé.

11. Système de moteur linéaire (10) selon l'une au moins des revendications 1 à 10,
**caractérisé en ce que**
le système de moteur linéaire (10) est un système de moteur linéaire à flux magnétique transversal, dans lequel le flux magnétique des éléments de stator (13) s'étend à angle droit par rapport à la direction de déplacement du rotor (21).
